# EUROPEAN PATENT SPECIFICATION

(11) **EP 4 516 946 B1**
(45) Date of publication and mention of the grant of the patent: **28.10.2026**
(21) Application number: 23937788.0
(22) Date of filing: 30.06.2023
(51) Int. Cl.: C22B 3/00, C01G 53/84

(54) **SYSTEM AND METHOD WITH REDUCTION IN MOISTURE CONTENT AND IMPURITIES OF NICKEL-COBALT HYDROXIDE**
SYSTEM UND VERFAHREN MIT VERRINGERUNG DES FEUCHTIGKEITSGEHALTS UND DER VERUNREINIGUNGEN VON NICKEL-KOBALT-HYDROXID
SYSTÈME ET PROCÉDÉ AVEC RÉDUCTION DE LA TENEUR EN HUMIDITÉ ET DES IMPURETÉS D'HYDROXYDE DE NICKEL-COBALT

(43) Date of publication of application: 05.03.2025
(73) Proprietor: PT ESG New Energy Material, Jakarta Selatan, Provinsi DKI Jakarta 12950 (ID); PT QMB New Energy Materials, Jakarta Selatan, Provinsi DKI Jakarta, 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: BRODJONEGORO, Satryo Soemantri, Provinsi DKI Jakarta 12950 (ID); XU, Kaihua, Shenzhen, Guangdong 518101 (CN); CUI, Tao, Provinsi DKI Jakarta 12950 (ID); KRISTIYANTO, Evan Wahyu, Provinsi DKI Jakarta 12950 (ID); MUZAYADAH, Nurul Lailatul, Provinsi DKI Jakarta 12950 (ID); AJI, Tegar Mukti, Provinsi DKI Jakarta 12950 (ID); HASIBUAN, Andi Syaputra, Provinsi DKI Jakarta 12950 (ID); WANALDI, Rizky, Provinsi DKI Jakarta 12950 (ID)
(74) Representative: Santarelli
(86) International application number: PCT/CN2023/104634
(87) International publication number: WO 2025/000447

(56) References cited:
- CN-A- 102 876 892
- CN-A- 110 669 934
- CN-A- 110 669 934
- CN-A- 110 699 557
- CN-B- 102 876 892
- CN-U- 208 717 125
- CN-U- 209 636 295
- CN-U- 211 079 293
- CN-U- 217 017 932

## Description

### FIELD OF THE DISCLOSURE

The disclosure relates to the technical field of equipment for processing laterite nickel ore, in particular to a system and method for reducing moisture content and impurity content of nickel cobalt hydroxide.

### BACKGROUND

Currently, the precipitation of nickel and cobalt in the hydrometallurgical processing of laterite nickel ore typically involves the following steps: first, acid leaching is performed on the laterite nickel ore; then, sodium hydroxide is used as a precipitant to precipitate nickel and cobalt from the acid leachate, forming a nickel cobalt precipitate solution; subsequently, the nickel cobalt precipitate solution undergoes thickening treatment to obtain nickel cobalt hydroxide precipitate (nickel hydroxide and cobalt hydroxide).

A Chinese patent with publication number CN113564383A discloses a system and process for two-stage pressurized extraction of nickel and cobalt from laterite nickel ore. This system comprises a high-pressure acid leaching unit, a high-pressure neutralization unit, a neutralization and impurity removal unit, and a nickel cobalt precipitation unit. In the process of extracting nickel and cobalt, the slurry treated in the high-pressure acid leaching unit is directly conveyed to the high-pressure neutralization unit, where it undergoes high-pressure neutralization in conjunction with added serpentine slurry. Following this, neutralization, impurity removal, and nickel cobalt precipitation treatments are carried out.

However, the nickel cobalt hydroxide precipitate filtered from the nickel cobalt precipitation unit in the aforementioned prior art contains impurities and has a relatively high moisture content, which is unfavorable for subsequent processing.

The patent document CN110669934A discloses an apparatus and method for leaching nickel-cobalt hydroxide residue, which includes a series of washing tanks, thickeners, and a filtration system. The process begins with drying the residue to remove volatile agents, followed by a three-stage reverse washing process that enhances the solubility of nickel and cobalt. The system recycles water and increases the value of the final product, with the press filtered residue being sold as raw material for pyrometallurgical systems.

### SUMMARY

The purpose of this disclosure is to provide a system and method for reducing moisture content and impurity content of nickel cobalt hydroxide to solve the technical problem in the existing technology where the nickel cobalt hydroxide precipitate filtered from the nickel cobalt precipitation unit contains impurities and has a high moisture content, which is unfavorable for subsequent processing.

In order to solve the above technical problems, this disclosure provides a system for reducing moisture content and impurity content of nickel cobalt hydroxide, which comprises a thickener, a cleaning equipment, a pressure filtration equipment, and a transit silo that are arranged sequentially along the direction of slurry conveyance; wherein, the cleaning equipment comprises a shell, a mixing device, a water source device, and a steam pipe; the shell is provided with a cleaning tank and is also provided with a material inlet, a steam inlet, and a material outlet that are connected to the cleaning tank; the material inlet of the shell is connected to the material outlet of the thickener, while the material outlet of the shell is connected to the pressure filtration equipment; the mixing device, located within the shell, is used to agitate and wash the material inside the cleaning tank; the water source device is utilized to inject water into the cleaning tank; the steam pipe is wrapped around the periphery of the transit silo, with its outlet connected to the steam inlet; the steam pipe serves to convey secondary steam generated in the high-pressure smelting area into the cleaning tank after heat exchange with the material inside the transit silo.

Furthermore, the shell is also equipped with an additive inlet connected to the cleaning tank, which is used for introducing additives into the cleaning tank.

Furthermore, the system also comprises a heating device, the heating device is positioned corresponding to the pressure filtration equipment and is used for evaporating moisture from the material after pressure filtration by the pressure filtration equipment, thereby reducing moisture content of the material.

Furthermore, the heating device comprises a hot air blower.

Furthermore, the steam pipe is spirally wound around the outer circumference of the transit silo.

Furthermore, the steam pipe comprises a water inlet pipe, multiple connecting pipes, and a water outlet pipe; the connecting pipes are arranged at intervals along the circumference of the transit silo, with each connecting pipe extending vertically; each connecting pipe has an inlet at one end and an outlet at the other end; the arrangement directions of the water inlet and outlet of every two adjacent connecting pipes are opposite, and the inlet of one connecting pipe is connected to the outlet of an adjacent connecting pipe; the water inlet pipe and the water outlet pipe are connected to the connecting pipes located at both ends among the plurality of connecting pipes, respectively.

Furthermore, the mixing device comprises an installation bracket, stirring blades, and a drive motor; the installation bracket is mounted on the shell; the stirring blades are rotatably installed on the installation bracket along a vertical axis and extend into the cleaning tank; the drive motor is connected to the stirring blades to drive their rotation.

Furthermore, the pressure filtration equipment comprises a plate-and-frame filter press.

Furthermore, the material inlet and the water inlet are located above the cleaning tank, while the material outlet is positioned at the bottom of the cleaning tank.

The disclosure also provides a method for reducing the moisture content and impurity content of nickel cobalt hydroxide using the apparatus defined in appended claim 1, comprising:
Step 1: Thickening: Transporting slurry to the thickener for thickening to obtain a higher-concentration nickel cobalt hydroxide slurry;
Step 2: Cleaning and impurity removal: Transporting the nickel cobalt hydroxide slurry from Step 1 into the cleaning tank, and injecting water and additives into the cleaning tank; using the mixing device to stir and wash the nickel cobalt hydroxide slurry to remove impurities to obtain a purified nickel cobalt hydroxide slurry;
Step 3: Pressure filtration: Transporting the purified nickel cobalt hydroxide slurry from Step 2 to the pressure filtration equipment; performing pressure filtration on the purified slurry using the pressure filtration equipment to obtain nickel cobalt hydroxide;
Step 4: Heating and evaporation: Using the heating device to evaporate the moisture from the nickel cobalt hydroxide obtained in Step 3, thereby reducing its moisture content, and transporting it into the transit silo;
Step 5: Secondary evaporation: Performing secondary moisture evaporation on the nickel cobalt hydroxide inside the transit silo using the steam pipe.

Furthermore, the additives comprise a dispersant and a filter aid.

Compared with existing technologies, the beneficial effect of this disclosure is: the thickener, the cleaning equipment, the pressure filtration equipment, and the transit silo are arranged sequentially along the slurry transfer direction. The steam pipe is wrapped around the periphery of the transit silo, with its outlet connected to the steam inlet and its inlet connected to the equipment generating secondary steam in the high-pressure smelting area. During operation, the slurry is first conveyed into the thickener, where it undergoes thickening to reduce the moisture content of the material. Subsequently, the material with reduced moisture content is conveyed from the material outlet of the thickener to the cleaning tank. Water is injected into the cleaning tank through the water source device, and the material is agitated and washed by a mixing device. The washed material is then conveyed to the pressure filtration equipment for pressure filtration to further reduce its moisture content before being finally conveyed to the transit silo. Through the processes in the thickener, the cleaning equipment, and the pressure filtration equipment, as well as heat exchange with steam inside the transit silo, the moisture content and impurity content of the material are further reduced, facilitating subsequent processing.

Furthermore, the steam pipe is wrapped around the periphery of the transit silo, with its outlet connected to the steam inlet. Due to the high temperature of the steam and the lower temperature of the material inside the transit silo, when the secondary steam generated in the high-pressure smelting area flows around the transit silo through the steam pipe, heat exchange occurs between the steam and the material inside the transit silo. This raises the temperature of the material in the transit silo, causing the moisture in the material to evaporate, which further reduces the moisture content of the material. After the heat exchange with the material inside the transit silo, the steam still maintains a relatively high temperature. Therefore, this high-temperature steam eventually enters the cleaning tank through the outlet of the steam pipe, thereby increasing the temperature inside the cleaning tank and enhancing the effectiveness of agitation and washing. Notably, the source of the steam is the unused steam produced in the high-pressure smelting area. By reusing this steam, the energy consumption of the entire equipment is reduced, contributing to energy conservation and emission reduction.

### BRIEF DESCRIPTION OF THE DRAWINGS

Accompanying drawings are for providing further understanding of embodiments of the disclosure. The drawings form a part of the disclosure and are for illustrating the principle of the embodiments of the disclosure along with the literal description. Apparently, the drawings in the description below are merely some embodiments of the disclosure, a person skilled in the art can obtain other drawings according to these drawings without creative efforts. In the figures:
FIG. 1 is a structural schematic diagram of the first embodiment of the system for reducing the moisture content and impurity content of nickel cobalt hydroxide provided in this disclosure;
FIG. 2 is the process flow diagram of the system for reducing the moisture content and impurity content of nickel cobalt hydroxide as shown in FIG. 1.

### DETAILED DESCRIPTION OF PREFERRED EMBODIMENTS

The preferred embodiments of this disclosure will be described in detail with reference to the accompanying drawings, which constitute a part of the present application and are used together with the embodiments to illustrate the principles of this disclosure, and are not intended to limit the scope of this disclosure.

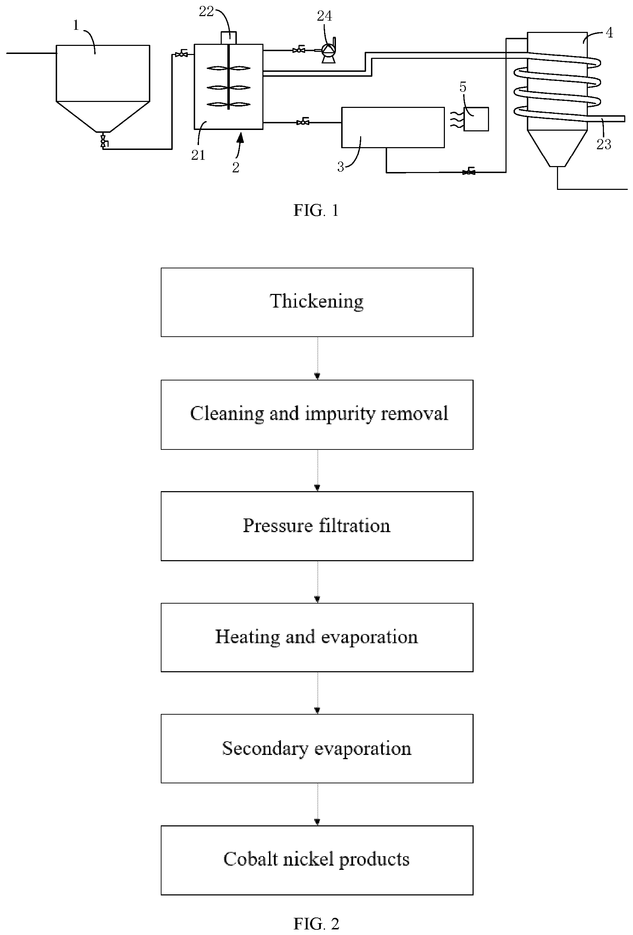

Please refer to FIG. 1 and FIG. 2, this disclosure provides a system for reducing the moisture content and impurity content of nickel cobalt hydroxide, which comprises a thickener 1, a cleaning equipment 2, a pressure filtration equipment 3, and a transit silo 4 that are arranged sequentially along the direction of slurry conveyance. Among them, the cleaning equipment 2 comprises a shell, a mixing device, a water source device 24, and a steam pipe 23. The shell is equipped with a cleaning tank 21 and is also provided with a material inlet, a steam inlet, and a material outlet that are connected to the cleaning tank 21. The material inlet of the shell is connected to the material outlet of the thickener 1, while the material outlet of the shell is connected to the pressure filtration equipment 3. The mixing device, located within the shell, is used to agitate and wash the material inside the cleaning tank 21. The water source device 24 is utilized to inject water into the cleaning tank 21. The steam pipe 23 is wrapped around the periphery of the transit silo 4, with its outlet connected to the steam inlet. The steam pipe 23 serves to convey secondary steam generated in the high-pressure smelting area into the cleaning tank 21 after heat exchange with the material inside the transit silo 4.

In the system provided by this disclosure for reducing the moisture content and impurity content of nickel cobalt hydroxide, the thickener 1, the cleaning equipment 2, the pressure filtration equipment 3, and the transit silo 4 are arranged in sequence along the direction of slurry transport. A steam pipe 23 is wrapped around the exterior of the transit silo 4, with its outlet connected to the steam inlet and its inlet connected to the equipment in the high-pressure smelting area that generates secondary steam. In operation, the slurry (i.e., nickel cobalt hydroxide with a high moisture content) is first conveyed into the thickener 1 to undergo thickening, thereby reducing the moisture content of the material. The material with reduced moisture content is then transported from the material outlet of the thickener 1 to a cleaning tank 21. Water is injected into the cleaning tank 21 through a water source device 24, and the material is agitated and washed by a mixing device. Following this, the material is conveyed to the pressure filtration equipment 3 for pressure filtration to further decrease its moisture content. Finally, the material is transported to the transit silo 4. Through the combined processes of the thickener 1, the cleaning equipment 2, the pressure filtration equipment 3, and heat exchange within the transit silo 4 using steam, the moisture content and impurity content in the material are further reduced, facilitating subsequent processing steps.

The steam pipe 23 is wrapped around the exterior of the transit silo 4, with its outlet connected to the steam inlet. Due to the high temperature of the steam and the lower temperature of the material inside the transit silo 4, when the secondary steam generated in the high-pressure smelting area flows through the steam pipe 23 around the transit silo 4, heat exchange occurs between the steam and the material inside the transit silo 4, raising the temperature of the material. This results in the evaporation of moisture from the material within the transit silo 4, further reducing its moisture content. After the heat exchange, the steam still maintains a relatively high temperature and eventually enters the cleaning tank 21 through the outlet of the steam pipe 23, thereby increasing the temperature inside the cleaning tank 21 and enhancing the effectiveness of agitation and washing. The steam used originates from waste steam produced in the high-pressure smelting area, and by reusing this steam, the energy consumption of the entire system is reduced, promoting energy conservation and emission reduction.

It should be noted that in the hydrometallurgical processing of laterite nickel ore, after completing the nickel and cobalt precipitation process, the obtained slurry is a solid-liquid mixture, with the solid portion comprising nickel hydroxide, cobalt hydroxide, and their mixtures. These nickel hydroxide, cobalt hydroxide, and their mixtures are the final desired materials.

Furthermore, in this embodiment, the thickener 1 comprises a cylinder body that is configured in a conical shape. The cylinder body has an accommodation chamber, and is also equipped with a slurry inlet and a slurry outlet, both of which are connected to the accommodation chamber. Specifically, the slurry inlet is located at the upper part of the cylinder body, while the slurry outlet is positioned at the conical base of the cylinder body. During operation, the slurry obtained after the first nickel and cobalt precipitation process contains a large amount of water. The slurry is fed into the accommodation chamber through the slurry inlet. Since the slurry is a solid-liquid mixture, the solid portion of the slurry gradually precipitates downwards within the accommodation chamber due to gravity, thereby separating the slurry into two parts: clarified liquid and high-concentration precipitate. The clarified liquid gradually flows out of the accommodation chamber through an overflow outlet, while the high-concentration precipitate at the bottom is transported into the cleaning equipment 2 through the slurry outlet. The thickening action of the thickener 1 significantly reduces the moisture content of the slurry.

Furthermore, in this embodiment, the shell is also equipped with an additive inlet connected to the cleaning tank 21. The additive inlet is used for adding additives into the cleaning tank 21. By adding the additives into the cleaning tank 21, the efficiency and effectiveness of agitation and cleaning can be enhanced.

Furthermore, in this embodiment, the shell is also equipped with a water inlet that is connected to the cleaning tank 21. The water source device 24 is connected to the water inlet to inject water into the cleaning tank 21 through the water inlet, facilitating the agitation and cleaning of the material slurry.

After the material is squeezed and filtered by the pressure filtration equipment 3, it still contains a relatively high moisture content. To further remove the moisture from the material, the system for reducing the moisture content and impurities in nickel cobalt hydroxide also comprises a heating device 5 in this embodiment. The heating device 5 is arranged corresponding to the pressure filtration equipment 3 and is used for evaporating the moisture in the material after it has been filtered under pressure by the pressure filtration equipment 3, thereby reducing the moisture content of the material. During use, after the material has been filtered under pressure by the pressure filtration equipment 3, the heating device 5 continuously heats the material to increase its temperature, thereby promoting the evaporation of moisture within the material and reducing its moisture content.

Furthermore, there are no specific restrictions on the form of the heating device 5, as long as it can evaporate the moisture in the pressure-filtered material. In this embodiment, the heating device 5 comprises a hot air blower. The hot air blower continuously blows hot air onto the material. On the one hand, the heat transfer from the hot air raises the temperature of the material, which facilitates the evaporation of moisture within the material. On the other hand, the airflow also accelerates the evaporation of the moisture, thereby improving the efficiency and effectiveness of the evaporation process.

Furthermore, there are no specific restrictions on the specific form of the steam pipe 23 winding around the outer periphery of the transit silo 4. In this embodiment, the steam pipe 23 is spirally wound around the outer periphery of the transit silo 4. This spiral winding method increases the contact area between the steam pipe 23 and the transit silo 4, improving steam utilization and thus enhancing the evaporation effect. Specifically, the transit silo 4 is configured as a whole cylindrical shape, and the system for reducing the moisture content and impurity content in nickel cobalt hydroxide also comprises multiple mounting brackets. These mounting brackets are all disposed on the outer sidewall of the transit silo 4 and are arranged in a spiral and spaced-apart manner. The steam pipe 23 is installed on these multiple mounting brackets, thereby attaching the steam pipe 23 to the outer sidewall of the transit silo 4 through the mounting brackets.

Furthermore, the steam pipe 23 is tightly attached to the outer sidewall of the transit silo 4, which results in better heat transfer efficiency.

Furthermore, there are no specific restrictions on the material of the transit silo 4. In this embodiment, the transit silo 4 is made of a material with good thermal conductivity.

Additionally, the top of the transit silo 4 is also provided with a vent hole, which is connected to the space inside the transit silo 4. The vent hole is used to vent the steam generated when heating the nickel cobalt hydroxide inside the transit silo 4.

Furthermore, the system for reducing the moisture content and impurity content in nickel cobalt hydroxide also comprises a thermal insulation sleeve. The thermal insulation sleeve is fitted around the outer periphery of the steam pipe 23, enclosing both the steam pipe 23 and the transit silo 4 within it. This configuration reduces the loss of heat. The material of the thermal insulation sleeve is heat-insulating.

In another embodiment, the steam pipe 23 comprises a water inlet pipe, multiple connecting pipes, and a water outlet pipe. The multiple connecting pipes are arranged at intervals along the circumference of the transit silo 4. Each connecting pipe extends vertically, with one end of each connecting pipe equipped with an inlet and the other end equipped with an outlet. The arrangement direction of the water inlet and outlet of every two adjacent connecting pipes is opposite, and the inlet of one connecting pipe is connected to the outlet of the adjacent connecting pipe. The water inlet pipe and the water outlet pipe are connected to the connecting pipes located at both ends among the multiple connecting pipes, respectively. This configuration can also increase the contact area between the steam pipe 23 and the transit silo 4, improving heat exchange efficiency.

Furthermore, in this embodiment, the mixing device comprises an installation bracket, stirring blades, and a drive motor. The installation bracket is mounted on the shell. The stirring blades are rotatably installed on the installation bracket along a vertical axis and extend into the cleaning tank 21. The drive motor is connected to the stirring blades to drive their rotation. Specifically, the top of the shell is equipped with a mounting hole, through which the stirring blades extend into the cleaning tank 21. The stirring blades are rotatably set along a vertical axis. The installation bracket is positioned on the top of the shell, and the drive motor is connected to the stirring blades to facilitate their rotation.

Furthermore, there are no specific restrictions on the form of the pressure filtration equipment 3. In this embodiment, the pressure filtration equipment 3 is a plate-and-frame filter press.

Furthermore, in this embodiment, the material inlet and the water inlet are located above the cleaning tank 21, while the material outlet is positioned at the bottom of the cleaning tank 21.

Additionally, this disclosure also provides a method for reducing the moisture content and impurity content in nickel cobalt hydroxide, comprising the following steps:
Step 1: Thickening: Transporting slurry to the thickener 1 for thickening to obtain a higher-concentration nickel cobalt hydroxide slurry.
Step 2: Cleaning and impurity removal: Transporting the nickel cobalt hydroxide slurry from Step 1 into the cleaning tank 21, and injecting water and additives into the cleaning tank 21. Using the mixing device to stir and wash the nickel cobalt hydroxide slurry to remove impurities to obtain a purified nickel cobalt hydroxide slurry.
Step 3: Pressure filtration: Transporting the purified nickel cobalt hydroxide slurry from Step 2 to the pressure filtration equipment 3. Performing pressure filtration on the purified slurry using the pressure filtration equipment 3 to obtain nickel cobalt hydroxide.
Step 4: Heating and evaporation: Using the heating device 5 to evaporate the moisture from the nickel cobalt hydroxide obtained in Step 3, thereby reducing its moisture content, and transporting it into the transit silo 4.
Step 5: Secondary evaporation: Performing secondary moisture evaporation on the nickel cobalt hydroxide inside the transit silo 4 using the steam pipe 23.

Furthermore, in Step 1, the nickel cobalt hydroxide slurry obtained after first nickel and cobalt precipitation process is transported into the thickener 1 through its material inlet. Under the action of its own gravity, the solid portion of the nickel cobalt hydroxide slurry gradually precipitates to the bottom of the thickener 1. At this point, the bottom of the thickener 1 contains a higher-concentration nickel cobalt hydroxide slurry. Through the thickening process of the thickener 1, the moisture content of the nickel cobalt hydroxide slurry is reduced.

Furthermore, in Step 2, the higher-concentration nickel cobalt hydroxide slurry obtained after thickening in the thickener 1 is transported into the cleaning tank 21 through the material inlet. Subsequently, water and additives are injected into the cleaning tank 21. Then, the mixing equipment 22 is activated to stir and wash the nickel cobalt hydroxide slurry inside the cleaning tank 21, thereby removing impurities from the slurry.

Furthermore, in this embodiment, during Step 2, the additives comprise a dispersant and a filter aid. The addition of the dispersant and the filter aid can effectively remove impurities from the nickel cobalt hydroxide slurry, enhancing the impurity removal effect.

Furthermore, in Step 3, the purified nickel cobalt hydroxide slurry is transported to the plate-and-frame filter press. Further squeezing and filtration are performed using the plate-and-frame filter press to further reduce the moisture content of the nickel cobalt hydroxide.

Furthermore, in Step 4, filter cake obtained after pressure filtration in the plate-and-frame filter press is heated using the hot air blower to promote the evaporation of moisture within the filter cake to reduce its moisture content.

Furthermore, in Step 5, the high-temperature steam within the steam pipe 23 continues to heat the nickel cobalt hydroxide slurry inside the transit silo 4, causing the moisture within the nickel cobalt hydroxide to continue evaporating and reducing moisture content of the nickel cobalt hydroxide as much as possible to facilitate subsequent processing. With such an arrangement, through operations such as thickening, cleaning, pressure filtration, and heating, the final nickel cobalt hydroxide obtained can have a relatively low moisture content.

The above is only a preferred specific embodiment of this disclosure, but the scope of protection of this disclosure is not limited to this.

## Claims

1. A system for reducing the moisture content and impurity content of nickel cobalt hydroxide, which comprises a thickener, a cleaning equipment, a pressure filtration equipment, and a transit silo that are arranged sequentially along the direction of slurry conveyance; wherein, the cleaning equipment comprises a shell, a mixing device, a water source device, and a steam pipe; the shell is provided with a cleaning tank and is also provided with a material inlet, a steam inlet, and a material outlet that are connected to the cleaning tank; the material inlet of the shell is connected to the material outlet of the thickener, while the material outlet of the shell is connected to the pressure filtration equipment; the mixing device, located within the shell, is configured to agitate and wash the material inside the cleaning tank; the water source device is configured to inject water into the cleaning tank; the steam pipe is wrapped around the periphery of the transit silo, with its outlet connected to the steam inlet; the steam pipe is configured to convey secondary steam generated in the high-pressure smelting area into the cleaning tank after heat exchange with the material inside the transit silo, wherein the shell is also equipped with an additive inlet connected to the cleaning tank, which is configured to introducing additives into the cleaning tank; and the system also comprises a heating device, the heating device is positioned corresponding to the pressure filtration equipment and is configured to evaporating moisture from the material after pressure filtration by the pressure filtration equipment, thereby reducing moisture content of the material.

2. The system for reducing the moisture content and impurity content of nickel cobalt hydroxide according to claim 1, wherein the heating device comprises a hot air blower.

3. The system for reducing the moisture content and impurity content of nickel cobalt hydroxide according to claim 1, wherein the steam pipe is spirally wound around the outer circumference of the transit silo.

4. The system for reducing the moisture content and impurity content of nickel cobalt hydroxide according to claim 1, wherein the steam pipe comprises a water inlet pipe, multiple connecting pipes, and a water outlet pipe; the connecting pipes are arranged at intervals along the circumference of the transit silo, with each connecting pipe extending vertically; each connecting pipe has an inlet at one end and an outlet at the other end; the arrangement directions of the water inlet and outlet of every two adjacent connecting pipes are opposite, and the inlet of one connecting pipe is connected to the outlet of an adjacent connecting pipe; the water inlet pipe and the water outlet pipe are connected to the connecting pipes located at both ends among the plurality of connecting pipes, respectively.

5. The system for reducing the moisture content and impurity content of nickel cobalt hydroxide according to claim 1, wherein the mixing device comprises an installation bracket, stirring blades, and a drive motor; the installation bracket is mounted on the shell; the stirring blades are rotatably installed on the installation bracket along a vertical axis and extend into the cleaning tank; the drive motor is connected to the stirring blades to drive their rotation.

6. The system for reducing the moisture content and impurity content of nickel cobalt hydroxide according to claim 1, wherein the pressure filtration equipment comprises a plate-and-frame filter press.

7. The system for reducing the moisture content and impurity content of nickel cobalt hydroxide according to claim 1, wherein the material inlet and the water inlet are located above the cleaning tank, while the material outlet is positioned at the bottom of the cleaning tank.

8. A method for reducing the moisture content and impurity content of nickel cobalt hydroxide using the system according to claim 1, comprising:
Step 1: Thickening: Transporting slurry to the thickener for thickening to obtain a higher-concentration nickel cobalt hydroxide slurry;
Step 2: Cleaning and impurity removal: Transporting the nickel cobalt hydroxide slurry from Step 1 into the cleaning tank, and injecting water and additives into the cleaning tank; using the mixing device to stir and wash the nickel cobalt hydroxide slurry to remove impurities to obtain a purified nickel cobalt hydroxide slurry;
Step 3: Pressure filtration: Transporting the purified nickel cobalt hydroxide slurry from Step 2 to the pressure filtration equipment; performing pressure filtration on the purified slurry using the pressure filtration equipment to obtain nickel cobalt hydroxide;
Step 4: Heating and evaporation: Using the heating device to evaporate the moisture from the nickel cobalt hydroxide obtained in Step 3, thereby reducing its moisture content, and transporting it into the transit silo;
Step 5: Secondary evaporation: Performing secondary moisture evaporation on the nickel cobalt hydroxide inside the transit silo using the steam pipe.

9. The method for reducing the moisture content and impurity content of nickel cobalt hydroxide according to claim 8, wherein the additives comprise a dispersant and a filter aid.

## Patentansprüche

1. System zur Reduzierung des Feuchtegehalts und des Verunreinigungsgehalts von Nickelkobalthydroxid, welches einen Eindicker, eine Reinigungsanlage, eine Druckfiltrationsanlage und einen Transitsilo umfasst, welche nacheinander entlang der Schlammförderrichtung angeordnet sind; wobei die Reinigungsanlage eine Schale, eine Mischvorrichtung, eine Wasserquellenvorrichtung und ein Dampfrohr umfasst; die Schale mit einem Reinigungstank versehen ist und auch mit einem Materialeinlass, einem Dampfeinlass und einem Materialauslass versehen ist, welche mit dem Reinigungstank verbunden sind; der Materialeinlass der Schale mit dem Materialauslass des Eindickers verbunden ist, während der Materialauslass der Schale mit der Druckfiltrationsanlage verbunden ist; die Mischvorrichtung, welche sich innerhalb der Schale befindet, dazu konfiguriert ist, das Material im Reinigungstank zu rühren und zu waschen; die Wasserquellenvorrichtung dazu konfiguriert ist, Wasser in den Reinigungstank einzuspritzen; das Dampfrohr um den Umfang des Transitsilos gewickelt ist, wobei sein Auslass mit dem Dampfeinlass verbunden ist; das Dampfrohr dazu konfiguriert ist, Sekundärdampf, welcher im Hochdruckschmelzbereich erzeugt wird, nach dem Wärmeaustausch mit dem Material innerhalb des Transitsilos in den Reinigungstank zu fördern, wobei die Schale auch mit einem Additiveinlass ausgestattet ist, welcher mit dem Reinigungstank verbunden ist, welcher dazu konfiguriert ist, Additive in den Reinigungstank einzuführen; und das System auch eine Heizvorrichtung umfasst, die Heizvorrichtung entsprechend der Druckfiltrationseinrichtung positioniert und dazu konfiguriert ist, nach der Druckfiltration durch die Druckfiltrationseinrichtung Feuchtigkeit aus dem Material zu verdampfen, wodurch der Feuchtegehalt des Materials reduziert wird.

2. System zur Reduzierung des Feuchtegehalts und des Verunreinigungsgehalts von Nickelkobalthydroxid nach Anspruch 1, wobei die Heizvorrichtung ein Heißluftgebläse umfasst.

3. System zur Reduzierung des Feuchtegehalts und des Verunreinigungsgehalts von Nickelkobalthydroxid nach Anspruch 1, wobei das Dampfrohr spiralförmig um den Außenumfang des Transitsilos gewickelt ist.

4. System zur Reduzierung des Feuchtegehalts und des Verunreinigungsgehalts von Nickelkobalthydroxid nach Anspruch 1, wobei das Dampfrohr ein Wassereinlassrohr, mehrere Verbindungsrohre und ein Wasserauslassrohr umfasst; die Verbindungsrohre in Abständen entlang des Umfangs des Transitsilos angeordnet sind, wobei sich jedes Verbindungsrohr vertikal erstreckt; jedes Verbindungsrohr einen Einlass an einem Ende und einen Auslass am anderen Ende aufweist; die Anordnungsrichtungen des Wassereinlasses und des Wasserauslasses jedes zweiten benachbarten Verbindungsrohrs sich gegenüberliegen, und der Einlass eines Verbindungsrohrs mit dem Auslass eines benachbarten Verbindungsrohrs verbunden ist; das Wassereinlassrohr und das Wasserauslassrohr mit den Verbindungsrohren verbunden sind, welche sich jeweils an beiden Enden unter der Vielzahl von Verbindungsrohren befinden.

5. System zur Reduzierung des Feuchtegehalts und des Verunreinigungsgehalts von Nickelkobalthydroxid nach Anspruch 1, wobei die Mischvorrichtung eine Installationshalterung, Rührflügel und einen Antriebsmotor umfasst; die Installationshalterung an der Schale montiert ist; die Rührflügel drehbar an der Installationshalterung entlang einer vertikalen Achse montiert sind und sich in den Reinigungstank hinein erstrecken; der Antriebsmotor mit den Rührflügeln verbunden ist, um ihre Rotation anzutreiben.

6. System zur Reduzierung des Feuchtegehalts und des Verunreinigungsgehalts von Nickelkobalthydroxid nach Anspruch 1, wobei die Druckfiltrationsanlage eine Platten- und Rahmenfilterpresse umfasst.

7. System zur Reduzierung des Feuchtegehalts und des Verunreinigungsgehalts von Nickelkobalthydroxid nach Anspruch 1, wobei sich der Materialeinlass und der Wassereinlass oberhalb des Reinigungstanks befinden, während sich der Materialauslass am Boden des Reinigungstanks befindet.

8. Verfahren zur Reduzierung des Feuchtegehalts und des Verunreinigungsgehalts von Nickelkobalthydroxid unter Verwendung des Systems nach Anspruch 1, umfassend:
Schritt 1: Verdicken: Transportieren von Schlamm zum Eindicker zur Eindickung, um einen Nickelkobalthydroxidschlamm mit höherer Konzentration zu erhalten;
Schritt 2: Reinigen und Entfernen von Verunreinigungen: Transportieren des Nickelkobalthydroxidschlamms aus Schritt 1 in den Reinigungstank und Einspritzen von Wasser und Additiven in den Reinigungstank; Verwenden der Mischvorrichtung zum Rühren und Waschen des Nickelkobalthydroxidschlamms, um Verunreinigungen zu entfernen, um einen gereinigten Nickelkobalthydroxidschlamm zu erhalten;
Schritt 3: Druckfiltration: Transportieren des gereinigten Nickelkobalthydroxidschlamms aus Schritt 2 zur Druckfiltrationsanlage; Durchführen einer Druckfiltration des gereinigten Schlamms unter Verwendung der Druckfiltrationsanlage, um Nickelkobalthydroxid zu erhalten;
Schritt 4: Erhitzen und Verdampfen: Verwenden der Heizvorrichtung zum Verdampfen der Feuchtigkeit aus dem in Schritt 3 gewonnenen Nickelkobalthydroxid, wodurch sein Feuchtegehalt reduziert wird, und Transportieren von diesem in den Transitsilo;
Schritt 5: Sekundärverdampfung: Durchführen einer sekundären Feuchtigkeitsverdampfung mit dem Nickelkobalthydroxid im Transitsilo unter Verwendung der Dampfleitung.

9. Verfahren zur Reduzierung des Feuchtegehalts und des Verunreinigungsgehalts von Nickelkobalthydroxid nach Anspruch 8, wobei die Additive ein Dispergiermittel und eine Filterhilfe umfassen.

## Revendications

1. Système de réduction de la teneur en humidité et de la teneur en impuretés de l'hydroxyde de nickel-cobalt, qui comporte un épaississant, un équipement de nettoyage, un équipement de filtration sous pression et un silo de transit qui sont agencés séquentiellement le long de la direction de transport de boue ; dans lequel, l'équipement de nettoyage comporte une coque, un dispositif de mélange, un dispositif source d'eau et un tuyau de vapeur ; la coque est munie d'une cuve de nettoyage et est également munie d'une entrée de matériau, d'une entrée de vapeur et d'une sortie de matériau qui sont raccordées à la cuve de nettoyage ; l'entrée de matériau de la coque est raccordée à la sortie de matériau de l'épaississeur, en même temps que la sortie de matériau de la coque est raccordée à l'équipement de filtration sous pression ; le dispositif de mélange, situé à l'intérieur de la coque, est configuré pour agiter et laver le matériau à l'intérieur de la cuve de nettoyage ; le dispositif source d'eau est configuré pour injecter de l'eau dans la cuve de nettoyage ; le tuyau de vapeur est enroulé sur la périphérie du silo de transit, sa sortie étant raccordée à l'entrée de vapeur ; le tuyau de vapeur est configuré pour transporter de la vapeur secondaire générée dans la zone de fusion à haute pression dans la cuve de nettoyage après échange thermique avec le matériau à l'intérieur du silo de transit, dans lequel la coque est également équipée d'une entrée d'additif raccordée à la cuve de nettoyage, qui est configurée pour introduire des additifs dans la cuve de nettoyage ; et le système comporte également un dispositif de chauffage, le dispositif de chauffage est positionné de manière correspondante à l'équipement de filtration sous pression et est configuré pour évaporer l'humidité du matériau après filtration sous pression par l'équipement de filtration sous pression, réduisant ainsi la teneur en humidité du matériau.

2. Système de réduction de la teneur en humidité et de la teneur en impuretés de l'hydroxyde de nickel-cobalt selon la revendication 1, dans lequel le dispositif de chauffage comporte une soufflante d'air chaud.

3. Système de réduction de la teneur en humidité et de la teneur en impuretés de l'hydroxyde de nickel-cobalt selon la revendication 1, dans lequel le tuyau de vapeur est enroulé en spirale sur la circonférence extérieure du silo de transit.

4. Système de réduction de la teneur en humidité et de la teneur en impuretés de l'hydroxyde de nickel-cobalt selon la revendication 1, dans lequel le tuyau de vapeur comporte un tuyau d'entrée d'eau, plusieurs tuyaux de raccordement et un tuyau de sortie d'eau ; les tuyaux de raccordement sont agencés à intervalles sur la circonférence du silo de transit, chaque tuyau de raccordement s'étendant verticalement ; chaque tuyau de raccordement comporte une entrée à une extrémité et une sortie à l'autre extrémité ; les directions d'agencement de l'entrée et de la sortie d'eau de chaque paire de tuyaux de raccordement adjacents sont opposées, et l'entrée d'un tuyau de raccordement est raccordée à la sortie d'un tuyau de raccordement adjacent ; le tuyau d'entrée d'eau et le tuyau de sortie d'eau sont raccordés aux tuyaux de raccordement situés aux deux extrémités parmi la pluralité de tuyaux de raccordement, respectivement.

5. Système de réduction de la teneur en humidité et de la teneur en impuretés de l'hydroxyde de nickel-cobalt selon la revendication 1, dans lequel le dispositif de mélange comporte un support d'installation, des pales d'agitation et un moteur d'entraînement ; le support d'installation est monté sur la coque ; les pales d'agitation sont installées de manière rotative sur le support d'installation le long d'un axe vertical et s'étendent dans la cuve de nettoyage ; le moteur d'entraînement est relié aux pales d'agitation pour entraîner leur rotation.

6. Système de réduction de la teneur en humidité et de la teneur en impuretés de l'hydroxyde de nickel-cobalt selon la revendication 1, dans lequel l'équipement de filtration sous pression comporte un filtre-presse à plaque et plateau.

7. Système de réduction de la teneur en humidité et de la teneur en impuretés de l'hydroxyde de nickel-cobalt selon la revendication 1, dans lequel l'entrée de matériau et l'entrée d'eau sont situées au-dessus de la cuve de nettoyage, en même temps que la sortie de matériau est positionnée au fond de la cuve de nettoyage.

8. Procédé de réduction de la teneur en humidité et de la teneur en impuretés de l'hydroxyde de nickel-cobalt à l'aide du système selon la revendication 1, comportant :
Étape 1 : Épaississement : le transport de la boue vers l'épaississeur pour épaississement afin d'obtenir une boue d'hydroxyde de nickel-cobalt plus concentrée ;
Étape 2 : Nettoyage et élimination des impuretés : le transport de la boue d'hydroxyde de nickel-cobalt de l'étape 1 dans la cuve de nettoyage, et l'injection d'eau et d'additifs dans la cuve de nettoyage ; l'utilisation du dispositif de mélange pour agiter et laver la boue d'hydroxyde de nickel-cobalt pour éliminer les impuretés afin d'obtenir une boue d'hydroxyde de nickel-cobalt purifiée ;
Étape 3 : Filtration sous pression : le transport de la boue d'hydroxyde de nickel-cobalt purifiée de l'étape 2 vers l'équipement de filtration sous pression ; la réalisation d'une filtration sous pression sur la boue purifiée à l'aide de l'équipement de filtration sous pression pour obtenir de l'hydroxyde de nickel-cobalt ;
Étape 4 : Chauffage et évaporation : l'utilisation du dispositif de chauffage pour évaporer l'humidité de l'hydroxyde de nickel-cobalt obtenu à l'étape 3, réduisant ainsi sa teneur en humidité, et son transporter dans le silo de transit ;
Étape 5 : Évaporation secondaire : la réalisation d'une évaporation secondaire d'humidité sur l'hydroxyde de nickel-cobalt à l'intérieur du silo de transit à l'aide du tuyau de vapeur.

9. Procédé de réduction de la teneur en humidité et de la teneur en impuretés de l'hydroxyde de nickel-cobalt selon la revendication 8, dans lequel les additifs comportent un dispersant et un auxiliaire filtrant.
